# EUROPÄISCHE PATENTANMELDUNG

(11) **EP 3 438 567 A1**
(43) Veröffentlichungstag der Anmeldung: **06.02.2019**
(21) Anmeldenummer: 18183043.1
(22) Anmeldetag: 12.07.2018
(51) Int. Cl.: F25B 13/00, G05B 13/02

(54) **SOFTSENSOR ZUR IDENTIFIKATION UND REGELUNG ODER STEUERUNG EINES WÄRMEPUMPENSYSTEMS**

(30) Priorität: 01.08.2017 DE 102017117370
(71) Anmelder: Vaillant GmbH, 42859 Remscheid (DE)
(72) Erfinder: Clauß, Roland, 40699 Erkrath (DE)
(74) Vertreter: Popp, Carsten

(57) **Zusammenfassung**

Verfahren zur Identifikation und Regelung oder Steuerung linearer oder nichtlinearer dynamischer Systeme für ein Wärmepumpensystem, enthaltend mindestens einen Kältemittelkreislauf mit einem Kältemittel und einen Kältemittelkompressor, mindestens eine Wärmezugabevorrichtung, mindestens eine Wärmeabgabevorrichtung, und eine Vorrichtung zur Druckverringerung, zum Einsatz im Bereich der Wohngebäudetechnik unter Verwendung eines Softsensors, der durch einen Rechner ausgebildet oder als Schaltung im Lüftungssystem integriert ist, wobei der Softsensor mit einem geeigneten künstlichen neuronalen Netz implementiert ist, wobei die Eingangsgrößen Kompressorleistung und Zustand der Vorrichtung zur Druckverringerung auf den Eingang des Softsensors gegeben werden, der Softsensor mit einem geeigneten Lernalgorithmus trainiert wird, die Eingangsgrößen approximiert und als Ausgangsgrößen elektrische Leistung, Temperaturen und Systemdrücke auf einem Speichermedium abgelegt werden, mit den Ausgangsgrößen die zugrundeliegende Dynamik des Wärmepumpensystems prognostiziert, und das Wärmepumpensystem geregelt oder gesteuert wird. Ferner der Softsensor selbst.

## Beschreibung

Die Erfindung betrifft ein Verfahren und einen Softsensor zur Identifikation und Regelung oder Steuerung linearer oder nichtlinearer dynamischer Systeme eines Wärmepumpensystems im Bereich der Wohngebäudetechnik unter Verwendung eines neuronalen Netzes, wobei mindestens eine Wärmepumpe dafür sorgt, Wärme von einem Ort, bei dem sie nicht benötigt wird oder unerwünscht ist, zu einem anderen Ort zu verschieben, um sie dort zu nutzen oder zu entsorgen. Unter Wohngebäuden werden dabei Privathäuser, Miethauskomplexe, Hotelanlagen, Gastronomie und kombinierte Wohn- und Geschäftshäuser verstanden, in denen Menschen dauerhaft leben und arbeiten.

Wärmepumpen sind seit langem Stand der Technik. Im einfachsten Fall besteht eine Wärmepumpe aus einem Kältemittelkreislauf mit einem Verdampfer, einem Kompressor, einer Wärmesenke, einem Kondensor und einer Wärmequelle. Hierbei wird ein Kältemittel mit einem niedrigen Siedepunkt bei niedriger Temperatur unter Wärmeaufnahme verdampft und danach komprimiert, wobei es sich erhitzt, aber gasförmig bleibt. Das erhitzte Gas wird dann einer Heizeinrichtung zugeführt, in der es Wärme an die Umgebung, meist das Innere eines Wohngebäudes, abgibt und hierbei kondensiert. Danach wird es entspannt, meist in einem isenthalpen Drosselventil, kühlt sich dabei ab und wird danach wieder zur Wärmequelle geführt, meist ist dies Erdreich oder Umgebungsluft.

Schon bei dieser einfachen Konfiguration weist das System eine Vielzahl von Freiheitsgraden auf, deren Regelung als aufwändig und schwierig, aber beherrschbar gilt. Bei Wärmequelle oder Wärmesenke können weitere Einrichtungen hinzukommen, bei der Wärmequelle etwa ein Lüfter, wenn Luftwärme genutzt werden soll, oder ein Sekundärkreislauf, falls Erdwärme genutzt werden soll. Bei der Wärmesenke kann ein Sekundärkreislauf mit Umwälzpumpen angeschlossen werden, der Wasser durch Heizkörper fördert. Auch mehrstufige Wärmepumpen, die Warmwasser und Heißwasser bei verschiedenen Temperaturen bereitstellen, sind üblich. Bei allen diesen Aggregaten sind nichtlineare Charakteristiken zu beobachten.

So muss bei der Verwendung von Außenluft oder Erdreich auf Vereisung geachtet werden, was Temperatur- und Feuchtemessung sowie eine Regelung des Druckniveaus des zuströmenden Kältemittels in die Wärmetauscher erfordert. Die Wärmeabgabe soll möglichst geregelt erfolgen können, etwa unter Zuhilfenahme von Raumluftthermostaten und entsprechenden Regelungen. Das Drosselventil hat dabei einerseits die Aufgabe, das Druckniveau des Kältemittels entsprechend einzustellen. Ferner soll die Energieaufnahme des Kompressors, der außer der reinen Verdichtungsleistung auch die Förderung durch das Leitungssystem bewerkstelligt, möglichst gering sein, was bedeutet, dass er möglichst wenig gegen das Drosselventil arbeiten soll. Auch soll der Kompressor weniger Kältemittel fördern, wenn die Wärmeabnahme geringer wird. Sonst würde die in die Wärmequelle zurücklaufende Kältemittelflüssigkeit den Verdampfer fluten und eine Verdampfung wäre nicht mehr möglich.

Was die Regelung dabei besonders erschwert, ist das nichtlineare Verhalten der einzelnen Komponenten und deren Vorausberechenbarkeit hinsichtlich des dynamischen Verhaltens des Gesamtsystems. Eine energetische Optimierung ist jedoch ohne ein solches Modell derzeit nicht ohne erheblichen Aufwand möglich.

Noch problematischer wird dies alles, wenn weitere Komponenten in dieses System integriert werden sollen. Die Liste der wünschenswerten Erweiterungen ist lang, wenn man die Vielzahl der in einem Wohngebäude vorhandenen Abwärmequellen, dessen verschiedene Wärmeanforderungen, den Kältebedarf, die Kapazität von Wärme- und sonstigen Energiespeichern sowie installierte regenerative Energiequellen wie Solarenergie, Wind und Wasserkraft ebenfalls berücksichtigen will, um den Gesamtenergiebedarf des Gebäudes zu minimieren. Dies betrifft beispielsweise die folgenden Wünsche und Forderungen:
- Die einzelnen Räume sollen unterschiedlich temperiert werden können.
- Duschwasser, Badewasser und heißes Trinkwasser soll aus hygienischen Gründen oberhalb von 58 Grad Celsius, besser noch bei 62 Grad Celsius bereitgestellt und bereitgehalten werden.
- Fußbodenheizungen sollen bei einer Vorlauftemperatur von 28 Grad Celsius betrieben werden können.
- Kühlräume sollen bei 3 bis 7 Grad wie handelsübliche Kühlschränke betrieben werden können.
- Moderne Waschmaschinen sollen über einen Kaltwasser- und einen Warmwasseranschluss verfügen können und verzögert wie auch fernsteuerbar arbeiten können, sobald Überschussenergie zur Verfügung steht oder extern zur Verfügung gestellt werden kann.
- Kondenstrockner sind als Wärmepumpentrockner erhältlich, die benötigten Wärme- und Kältemengen könnten günstiger auch zentral durch ein Wärmepumpensystem bereitgestellt werden.
- Hochwertige Wohnausstattungen wie Saunalandschaften, Schwimmbäder und Badezimmer mit Whirlpools und dergleichen benötigen kurzzeitig hohe Wärmemengen auf unterschiedlichem Temperaturniveau, die nach Gebrauch im Idealfall wieder zurückgewonnen werden sollten.
- Hobbyeinrichtungen wie Sporträume und Eisbäder benötigen Klimatisierung und Kühlung.
- Aquarien für tropische Fische benötigen beträchtliche Wärmemengen, um eine konstant einstellbare Temperatur zwischen 25 und 30 Grad Celsius bei unterschiedlich abweichenden Raumlufttemperaturen aufrecht erhalten zu können.
- Im Sommer soll eine Umschaltung von Fußbodenheizung auf Konstanthaltung der Temperatur durch Kühlwasser bei moderaten Temperaturen erfolgen können, um eine zugluftfreie Raumtemperierung ohne Auskondensation von Feuchtigkeit zu ermöglichen, etwa durch Betrieb mit einer Vorlauftemperatur von 15 bis 20 Grad Celsius. An die Stelle von wasserführenden Leitungen im Fußboden können auch Kühlwände oder Kühldecken treten.
- Die Abwärme von Raumluftklimaanlagen sollte energetisch nutzbar sein, etwa zur Brauchwassererwärmung oder zur langfristigen Zwischenspeicherung, die erforderliche Kälte sollte durch den Kältemittelkreislauf der Wärmepumpe lieferbar sein.
- Solaranlagen können die Energie zum Betrieb des Wärmepumpenkompressors bereitstellen, bei hohen Außentemperaturen würde eine Kühlung der Solarzellen deren Wirkungsgrad erhöhen und gleichzeitig eine weitere Wärmequelle bereitstellen.
- Bei der längerfristigen Speicherung von Wärmeenergie kann eine Erniedrigung des Temperaturniveaus bei gleichzeitiger Vergrößerung des Speichervolumens einer Speicherflüssigkeit die Verluste durch Wärmeleitung deutlich reduzieren, ohne die Gesamtkosten signifikant zu erhöhen.
- Wünschenswert wäre auch eine Fernbedienbarkeit, damit bei Abwesenheit der Nutzer keine Energie verschwendet wird, die Nutzer beim Eintreffen aber bereits die gewünschten Raumklimabedingungen vorfinden.
- Selbstverständlich soll eine zusätzliche Energiebereitstellung durch elektrische Energie oder durch Öl-, Gas- oder andere Feuerungen jederzeit möglich und in das System integrierbar sein können, wenn ein energieautarker Betrieb gerade nicht möglich ist.
- In Notfällen soll ein Notbetrieb möglich sein.
- Vorhandene Systeme sollen flexibel umrüstbar, nachrüstbar, erweiterbar und individualisierbar sein.
- Alles das soll vor allem aber bezahlbar sein.

Während eine bloße Energiebilanz über alle Verbraucher zumeist zeigt, dass die Gesamtenergiebilanz für längere Zeiträume durchaus aufgehen könnte und große Vorteile bieten würde, wenn ein geeignetes Wärmepumpensystem zum Einsatz käme, sind die komplexen Anforderungen an Regelbarkeit und Prognostizierbarkeit des sich ergebenden Systems derzeit nach herkömmlichem Stand der Technik technisch nicht erfüllbar. Darüber hinaus erzeugen alle diese Systeme nach derzeitigem Stand der Technik Messwerte in großer Zahl aus teuren Messfühlern und Messgeräten, die oftmals redundant sind oder sogar unterschiedliche Daten für dieselbe Zustandsgröße liefern. Dies ist unwirtschaftlich und führt zu Zielkonflikten. Auch kann das Anschließen von zusätzlichen Geräten die Regelbarkeit des Gesamtsystems unvorhersehbar stören oder ungünstig beeinflussen, etwa Regelinstabilität bei bestimmten Betriebszuständen verursachen, ohne dass man dies zuvor erkennen kann.

Bekannte Regler oder Steuerungen aus dem Stand der Technik basieren üblicherweise auf einem physikalischen Modell und WENN-DANN-Regeln sowie der Überwachung von vorab festgelegten Grenzwerten oder bekannten Stellgrößen. Derartige klassische Regler oder Steuerungen haben jedoch den Nachteil, dass das Aufstellen des physikalischen Modells aufwändig ist und die Regler nicht für alle Systemkonfigurationen eine optimale Regelung ermöglichen. Vor allem aus der ökonomischen Sicht ist die Lösung auch nicht optimal.

So beschreibt die WO 2014/203731 A1 ein System zum Betrieb einer Klimaanlage zur Klimatisierung von Räumen, bei der physikalisches Modell gebildet wird, auf dessen Basis eine Vorhersage des Systemverhaltens erfolgt. Hierzu fließen Umgebungsparameter ein, die in einem Lagrange-System zu Koeffizienten verarbeitet werden, mit denen die Regelung erfolgt, wobei der Gesamtenergieverbrauch optimiert werden kann. Erweiterungen oder sonstige Änderungen sind nur schwer möglich, da das physikalische Modell jeweils entsprechend neu aufgestellt werden muss, da das System nicht trainierbar ist.

Ein künstliches neuronales Netz basiert meist auf der Vernetzung vieler Neuronen. Da es in der Lage ist, ein bestimmtes Verhalten durch einen Algorithmus zu erlernen, wird es in der Praxis immer häufiger angewandt. Es wird auch zunehmend in der Regelungstechnik eingesetzt. Beispielsweise offenbart die DE 199 42 144 A1 ein Verfahren zur adaptiven Identifikation und adaptiven Dämpfung von Schwingungen, wobei durch ein "Harmonisch Aktiviertes Neuronales Netz" Parameter der Schwingung oder Ungleichförmigkeit identifiziert und eine entsprechende Kompensationsgröße ermittelt wird.

Aus der DE 10 2010 012 682 B4 ist ein Verfahren zur Regelung einer Stellgröße unter Verwendung eines auf einem Chip basierenden, neuronalen Netzes bekannt, wobei das neuronale Netz an einem Sensor angeschlossen ist und Zugriff auf eine Datenbank hat. Durch das neuronale Netz wird eine neue als dominant erkannte Abweichungsfunktion ermittelt und sie auf ein entsprechendes Stellglied zum Regeln angewandt.

Die WO 2017/108405 A1 beschreibt ein Verfahren und einen Softsensor zum Ermitteln einer Leistung eines Energieerzeugers, im Speziellen die einer Gasturbine, auf deren Welle sich zusätzlich eine mit ihr mechanisch und thermisch gekoppelte Dampfturbine befindet. Im gekoppelten Betrieb ist die Leistungsabgabe der Gasturbine allein sehr schlecht messbar, die Kenntnis der momentanen Leistungsabgabe ist aber für die energetische Optimierung des Gesamtsystems erforderlich. Aus diesem Grund wird ein Softsensor vorgeschlagen, der auf die Leistung der Gasturbine trainiert wird. Es handelt sich dabei aber nicht um ein System von gekoppelten Energieverbrauchern und Erzeugern, dessen Nichtlinearität die Regelprobleme bereitet, sondern um die Schwierigkeit, zwei Leistungsabgabe von zwei Energieerzeugern zu bestimmen, die auf derselben Welle angeordnet sind und deren Leistung nur gemeinsam messbar ist.

In der EP 2 998 802 A1 wird ein Energieverteilsystem für ein Energienetz eines Wohngebäudes beschrieben. Hierbei übernimmt eine Energieverteileinheit die Energieverteilung und optimiert diese in Anbetracht der aus verschiedenen externen und internen, beispielsweise regenerativen Quellen bereitgestellten elektrischen Energie. Energieströme aus Wärmeverschiebungssystemen kann das Energieverteilsystem jedoch nicht optimieren und zuteilen.

Kennwerte für elektrische Leistung können zwar mittels statischer Kennfelder approximiert werden. Dafür ermittelt man mit Hilfe von Herstellerdaten und zusätzlichen Vermessungen des Systems sowie dem Zusammenhang zwischen der Zielgröße elektrische Leistung und Messgrößen wie z. B. Drehzahlsignal, Pumpenleistungen, PWM (Puls-Weiten-Modulations)-Signal etc., um die Zielgröße ohne zusätzliche Messgeräte möglichst genau abzubilden. Hierzu ist das PWM-Signal das Spannungseingangssignal des Kompressors der Wärmepumpe. Diese statische Approximation eignet sich allerdings nicht für dynamische Prozesse. Das nichtlineare Verhalten eines Systems kann zwar mit globalen Linearisierungsansätzen approximiert werden, jedoch ist dann die Ausgangsgröße des Softsensors stark abhängig vom Betriebspunkt. Beispielsweise wird die Systemantwort bei der elektrischen Leistung nicht vom augenblicklichen Wert des Systemreizes allein bestimmt, da dies eine zeitvariierende Größe ist.

Zur Identifikation nichtlinearer Prozesse ohne wesentliche Apriori-Kenntnisse der Modellstruktur wird der erfindungsgemäße Softsensor eingesetzt. In Simulationen sowie in Versuchen in der Praxis hat sich gezeigt, dass ein lokales Modellnetz mit normierten radialen Basisfunktionen ein sehr gut geeignetes Modellnetz zur Identifikation nichtlinearer Prozesse ist.

Ein Softsensor, der auch als Einschätzer, Beobachter, oder Softwaresensor bezeichnet wird, ist meistens durch einen Rechner oder ein ähnliches Gerät mit einem implementierten künstlichen neuronalen Netz ausgebildet.

Die Aufgabe der Erfindung ist daher, eine einfache und wirtschaftliche Lösung bereitzustellen, die die oben beschriebenen Probleme des Einsatzes eines Wärmepumpensystems löst. Hierzu gehört, alternativ zu Hardwaresensoren oder Messeinrichtungen einen Softsensor für das Wärmepumpensystem zur Verfügung zu stellen, welcher in der Lage ist, das lineare oder nichtlineare dynamische Übertragungsverhalten von Messgrößen auf die jeweiligen Zielgrößen mit einer hinreichenden Genauigkeit und Qualität zu modellieren, um im Wärmepumpensystem auch dynamische Messgrößen ohne zusätzliche Hardwaresensoren erfassen zu können, und außerdem mit Hilfe des Softsensors das Wärmepumpensystem zu regeln oder zu steuern.

Die Erfindung löst die Aufgabe gemäß dem unabhängigen Anspruch 1 durch ein Verfahren zur Identifikation und Regelung oder Steuerung linearer oder nichtlinearer dynamischer Systeme für ein Wärmepumpensystem für Wohngebäude, enthaltend mindestens
- einen Kältemittelkreislauf mit einem Kältemittel und
- einen Kältemittelkompressor,
- mindestens eine Wärmezugabevorrichtung,
- mindestens eine Wärmeabgabevorrichtung, und
- eine Vorrichtung zur Druckverringerung,
   zum Einsatz im Bereich der Wohngebäudetechnik unter Verwendung eines Softsensors, der durch einen Rechner ausgebildet oder als Schaltung im Lüftungssystem integriert ist, wobei der Softsensor mit einem geeigneten künstlichen neuronalen Netz implementiert ist, wobei
- die Eingangsgrößen Kompressorleistung und Zustand der Vorrichtung zur Druckverringerung auf den Eingang des Softsensors gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des Wärmepumpensystems prognostiziert, und das Wärmepumpensystem geregelt oder gesteuert wird.

In einer weiteren Ausgestaltung der Erfindung ist vorgesehen, dass die Ausgangsgröße elektrische Kompressorleistung als Führungsgröße für eine Kaskadenregelung des Wärmepumpensystems verwendet wird.

In einer weiteren Ausgestaltung der Erfindung ist vorgesehen, dass mindestens eine Wärmezugabevorrichtung ein Kältemittel-Luft-Wärmeaustauscher ist, der von einen elektrischen Lüfter zwangsbelüftet wird, und die Eingangsgröße Lüfterleistung auf den Eingang des Softsensors gegeben und der Softsensor damit trainiert wird.

In einer weiteren Ausgestaltung der Erfindung ist vorgesehen, dass mindestens eine Wärmeentnahmevorrichtung ein Kondensor ist, der an einen Heizkreislauf angeschlossen ist, der von einer elektrischen Umwälzpumpe zwangsdurchströmt wird, und die Eingangsgröße Pumpenleistung auf den Eingang des Softsensors gegeben und der Softsensor damit trainiert wird.

In einer weiteren Ausgestaltung der Erfindung ist vorgesehen, dass der Kältemittelkreislauf umschaltbar so ausgeführt ist, dass die Funktionen von Wärmezugabevorrichtung und Wärmeentnahmevorrichtung umgekehrt werden können und die Leistungs-Eingangsgrößen auch für diesen Fall auf den Eingang des Softsensors gegeben werden und der Softsensor damit trainiert wird.

In einer weiteren Ausgestaltung der Erfindung ist vorgesehen, dass ein weiterer Kältemittelkreislauf zur Erzeugung einer höheren Nutztemperatur in das Wärmepumpensystem eingekoppelt wird, enthaltend mindestens
- einen Kältemittelkreislauf mit einem höher siedenden Kältemittel und
- einem Kältemittelkompressor,
- mindestens einer Wärmezugabevorrichtung, die mit der Wärmeabgabevorrichtung des ersten Kältemittelkreislaufes verbunden ist,
- mindestens einer Wärmeabgabevorrichtung, und
- einer Vorrichtung zur Druckverringerung,
wobei
- die Eingangsgrößen Kompressorleistung und Zustand der Vorrichtung zur Druckverringerung auf den Eingang des Softsensors des Wärmepumpensystems gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des gekoppelten Wärmepumpensystems prognostiziert, und das gekoppelte Wärmepumpensystem geregelt oder gesteuert wird.

In einer weiteren Ausgestaltung der Erfindung ist vorgesehen, dass ein weiterer Kältemittelkreislauf zur Erzeugung einer niedrigeren Nutztemperatur in das Wärmepumpensystem eingekoppelt wird, enthaltend mindestens
- einen Kältemittelkreislauf mit einem niedriger siedenden Kältemittel und
- einem Kältemittelkompressor,
- mindestens einer Wärmezugabevorrichtung,
- mindestens einer Wärmeabgabevorrichtung, die mit der Wärmezugabevorrichtung des ersten Kältemittelkreislaufes verbunden ist, und
- einer Vorrichtung zur Druckverringerung,
wobei
- die Eingangsgrößen Kompressorleistung und Zustand der Vorrichtung zur Druckverringerung auf den Eingang des Softsensors des Wärmepumpensystems gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des gekoppelten Wärmepumpensystems prognostiziert, und das gekoppelte Wärmepumpensystem geregelt oder gesteuert wird.

Beide zusätzlichen Kältemittelkreisläufe können kleiner dimensioniert werden, als wie wenn sie ungekoppelt betrieben würden, weil die Temperturspreizung aufgrund der im Hauptkältemittelkreislauf vorhandenen Temperaturnieaus geringer ist, außerfem steigt aufgrund der geringeren Temperaturspreizung der erreichbare Wirkungsgrad, was Vorteile dieser Kopplung sind.

In einer weiteren Ausgestaltung der Erfindung ist vorgesehen, dass für mindestens einen Kältemittelkreislauf eine Wärmezugabevorrichtung für einen Abwärmespeicher gebildet ist, der aus Abwärme produzierenden Hausgeräten oder einer Klima-Lüftungsanlage gespeist wird.

In einer weiteren Ausgestaltung der Erfindung ist vorgesehen, dass für mindestens einen Kältemittelkreislauf eine Kälteentnahmevorrichtung für einen Kältespeicher gebildet ist, der Kälte benötigende Hausgeräte oder eine Klima-Lüftungsanlage versorgt.

In einer weiteren Ausgestaltung der Erfindung ist vorgesehen, dass der Softsensor den optimalen Wirkungsgrad des Wärmepumpensystems unter Einbeziehung verfügbarer regenerativer Energie und externen Energieangeboten vorgibt und die benötigte Energiemenge in einem gewünschten Zeitraum mit Hilfe des Softsensors ermittelt und prognostiziert wird.

In einer weiteren Ausgestaltung der Erfindung ist vorgesehen, dass der Softsensor gezielt auf bekannten Mustern der Ausgangsgrößen trainiert wird, so dass die bekannten Muster im Wärmepumpensystem detektiert werden.

In einer weiteren Ausgestaltung der Erfindung ist vorgesehen, dass der Softsensor gezielt darauf trainiert wird, dass bei einem Ausfall eines hardwareseitigen Hochdrucksensors eines Kältekreislaufes ein Notbetrieb eingestellt wird, der ein Weiterarbeiten des Wärmepumpensystems ermöglicht.

In einer weiteren Ausgestaltung der Erfindung ist vorgesehen, dass der Softsensor gezielt darauf trainiert wird, dass ein Einfrieren oder Fluten eines Wärmetauschers durch ein Muster der Ausgangsgröße Druckverlust abgebildet wird, so dass der Softsensor beim Erkennen dieses Musters eine Warnmeldung ausgibt.

Die Erfindung umfasst auch den Softsensor, der die Aufgabe der Erfindung löst, also einen Softsensor zur Ermittlung der Ausgangsgrößen Leistung und Druckverlust eines Wärmepumpensystems im Bereich der Wohngebäudetechnik, wobei eine Einrichtung durch einen Computer oder eine Schaltung im Wärmepumpensystem integriert ist, welche direkt, per LAN, WLAN oder Bluetooth an dem Wärmepumpensystem angeschlossen ist, und der Softsensor mit einem geeigneten künstlichen neuronalen Netz implementiert ist, und der Softsensor dazu ausgebildet ist, Messgrößen des Wärmepumpensystems als Eingangsgrößen mit einem geeigneten Lernalgorithmus zu trainieren, und die Ausgangsgrößen als Regel- oder Steuergrößen zu verwenden, um den Betrieb des Wärmepumpensystem zu regeln oder zu steuern.

Der Softsensor kann als eine eigenständige Einrichtung oder im Wärmepumpensystem integriert ausgebildet werden, wobei der Softsensor mit einem mehrdimensionalen neuronalen Netz mit normierten radialen Basisfunktionen implementiert ist, und mit einem lokalen Modellnetz mit einem Lolimot-Algorithmus trainiert ist. Nach der Trainingsphase besitzt der Softsensor eine Einrichtung zum Detektieren des Wärmepumpensystems. Ferner kann man mit Hilfe des Softsensors den elektrischen Energieverbrauch des Wärmepumpensystems prognostizieren.

In einer weiteren Ausgestaltung der Erfindung ist vorgesehen, dass der Softsensor mit einem mehrdimensionalen neuronalen Netz mit normierten radialen Basisfunktionen implementiert ist.

In einer weiteren Ausgestaltung der Erfindung ist vorgesehen, dass der Softsensor eine Einrichtung zum Detektieren des Wärmepumpensystems aufweist.

In einer weiteren Ausgestaltung der Erfindung ist vorgesehen, dass der Softsensor den elektrischen Energieverbrauch des Wärmepumpensystems prognostiziert.

Die Erfindung wird nachfolgend an einem Beispiel anhand von 5 Figuren näher erläutert. Hierbei zeigen:
Fig. 1 eine Skizze mit dem hier angewandten lokalen Modellnetz,
Fig. 2 ein einfaches Wärmepumpensystem,
Fig. 3 die dynamischen Anregung im Beispielfall der Fig. 2,
Fig. 4 einen Approximationsverlauf für die Gesamtleistungsaufnahme und den Hochdruckwert,
Fig. 5 einen Approximationsverlauf für die Gesamtleistungsaufnahme und den Hochdruckwert.

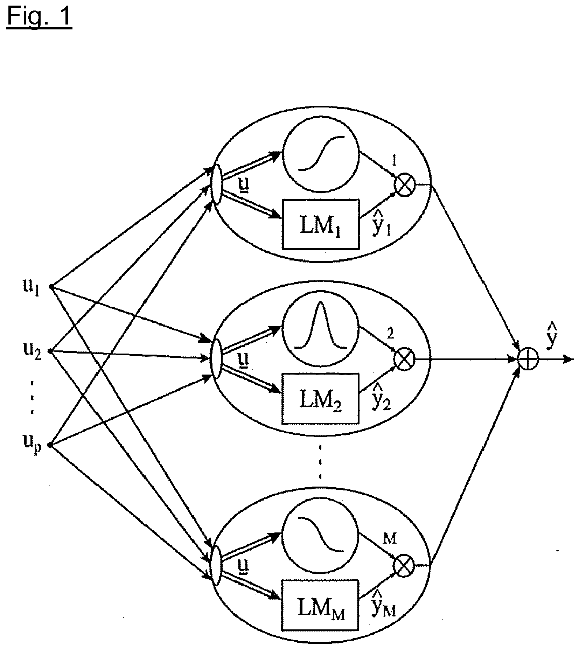

Fig. 1 zeigt eine Skizze mit dem hier angewandten lokalen Modellnetz, wobei es auf einem neuronalen Netz mit normierten radialen Basisfunktionen basiert, und jedes Neuron mit einem lokalen linearen Teilmodell versehen ist. Die radialen Basisfunktionen beschreiben dabei den Gültigkeitsbereich der jeweiligen Teilmodelle. Die besondere Eigenschaft des lokalen Modellnetzes ist das effiziente Training, in dem die Parameter der verdeckten Schicht mit heuristischen Verfahren bestimmt werden. Weiterhin wird mit einer geringeren Anzahl von Neuronen bereits eine genaue Approximation erreicht. Außerdem ist es möglich, für rekursiv arbeitende Algorithmen, wie zum Beispiel LOcal Linear MOdell Tree (Lolimot)-Algorithmus, eine Modellkomplexität mit maximaler Anzahl an Neuronen vorzugeben. Das lokale Modellnetz eignet sich gut für mittel- bis hoch-dimensionale Abbildungsaufgaben aufgrund der schnellen Parameterberechnung und des relativ langsamen Anstieg der Parameterzahl mit der Eingangsdimension. Besonders aus regelungstechnischer Sicht ist das lokale Modellnetz mit linearen Teilmodellen sehr erstrebenswert, da die Teilmodelle zur Auslegung von Regler und zur linearen Stabilitätsanalyse verwendet werden können.

Der Lolimot-Algorithmus ist ein rekursiver, wachsender Algorithmus mit einem heuristischen Baum-Konstruktionsverfahren zur Approximation von Funktionen basierend auf dem lokalen Modellnetz. Er ist sowohl für statische als auch für dynamische System-Identifikation geeignet. Bei einem iterativen Verfahren wird die Struktur des Modellnetzes optimiert.

In einer modernen Anlage gehört Energiemanagement zunehmend zur wichtigen Anlagedaten. Der Wirkungsgrad eines Energiesystems ist definiert durch: η = Nutzen / Aufwand. Diesen gilt es möglichst zu maximieren, in dem beispielsweise der Aufwand minimiert oder der Nutzen maximiert wird.

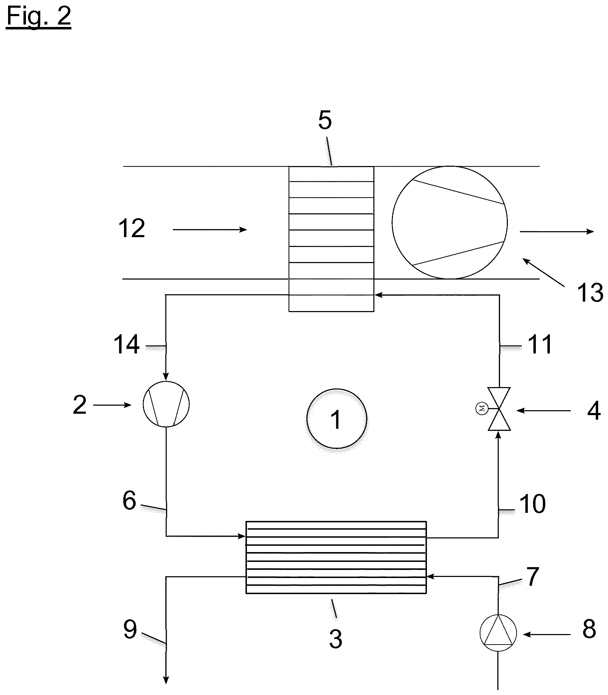

Fig. 2 zeigt ein einfaches Luft/Wasser-Wärmepumpensystem, welches aus regelungstechnischer Sicht ein MIMO (Multi-Input-Multi-Output)-System ist. Das Wärmepumpensystem umfasst in diesem Beispiel einen Kühlkreislauf 1 mit einem Kältekompressor 2, einem Kondensor 3, einem Entspannungs-Regelventil 4 und einem Verdampfer 5. Hierbei strömt verdichtetes Kältemittel 6 zum Kondensor 3, wo es seine Wärme an den Wärmeträgerstrom 7 abgibt, der von der Umwälzpumpe 8 als Wärmestrom 9 zum Verbraucher gefördert wird. Das hierdurch abgekühlte und kondensierte Kältemittel 10 gelangt zum Entspannungs-Regelventil 4, wobei es sich weiter abkühlt und als Kältestrom 11 in den Verdampfer 5 geleitet wird. Dort nimmt es Wärme der Umgebungsluft 12, die vom Lüfter 13 durch den Verdampfer 5 gesogen wird, auf. Das erwärmte Kältemittel 14 wird wieder von Kältekompressor 2 verdichtet, womit der Kältekreislauf 1 geschlossen ist.

Für das gewählte Beispiel ist das nichtlineare, dynamische, am Prüfstand verifizierte Prozessmodell bekannt. Daher kann das nichtlineare, dynamische Übertragungsverhalten der Eingangsgrößen Pumpen-Leistung, Kompressor-Leistung, Lüfter-Leistung und EEV-Position auf die Ausgangsgrößen bzw. Zustände Vorlauftemperatur, Hochdruck, elektrische Leistung und COP mittels einer Black-Box-Identifikation modelliert und sowohl mit dem Prozessmodell als auch mit den gemessenen Werten verglichen werden. Das so gebildete System kann damit trainiert werden. Als Modelstruktur werden lokale Modellnetze verwendet, welche auf einem neuronalen Netz mit normierten radialen Basisfunktionen basieren und dieses mit lokal linearen Teilmodellen (LLM) erweitern.

Mit dieser Methode können nachfolgend auch alle Erweiterungen erfolgen. Für diese müssen lediglich zunächst separate Teilmodelle gebildet werden, die ihrerseits lokal lineare Teilmodelle besitzen. Für diese Teilmodelle findet zunächst jedes für sich und danach als Teil des Gesamtsystems dieselbe Prozedur statt. Der Hersteller des Wärmepumpensystems ist somit in der Lage, alle Zusatzkomponenten von Drittherstellern entsprechend zu modellieren, zu zertifizieren und an bestehende Wärmepumpensysteme als OEM-Komponenten anzukoppeln.

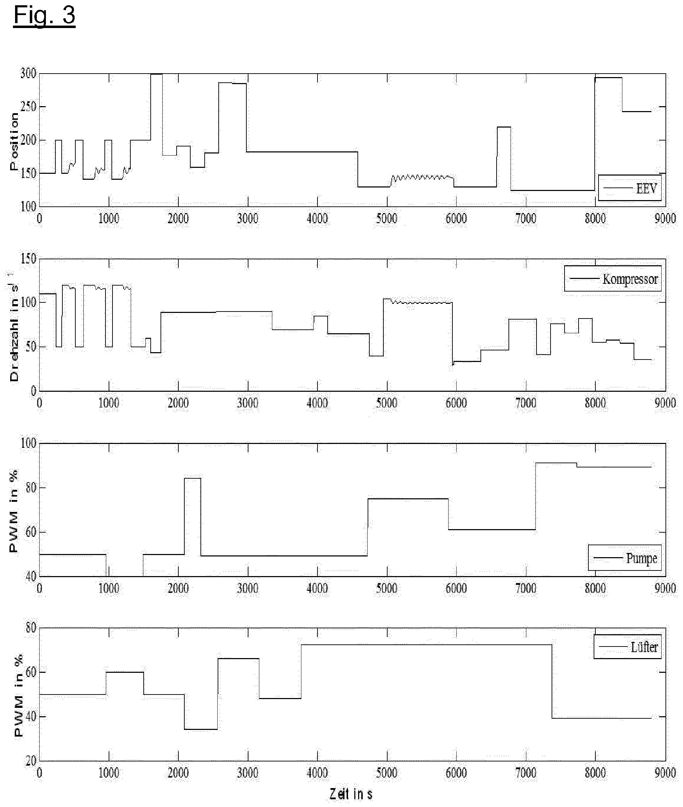

In Fig. 3 werden die dynamischen Anregungen des in Fig. 2 gezeigten Wärmepumpensystems über einen Zeitraum von 15 Minuten dargestellt: Hierbei handelt es sich von oben nach unten um die Position des Entspannungs-Regelventils 4, die Drehzahl des Kältekompressors 2, der PWM-Wert der Umwälzpumpe 8 und der PWM-Wert des Lüfters 13. PWM steht dabei für Puls-Wellen-Modulation für die Drehzahlregelung der jeweiligen Motoren.

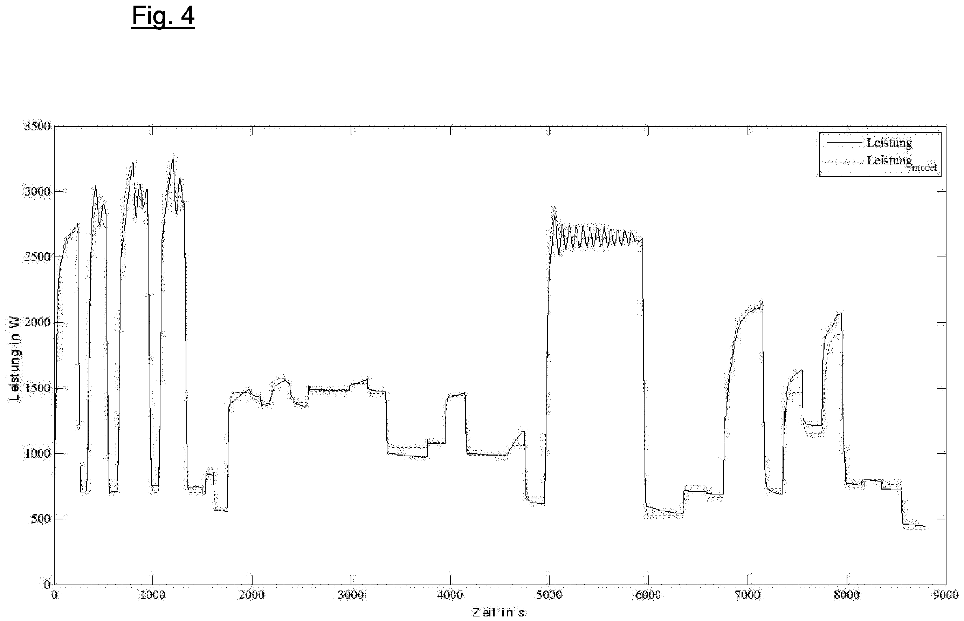

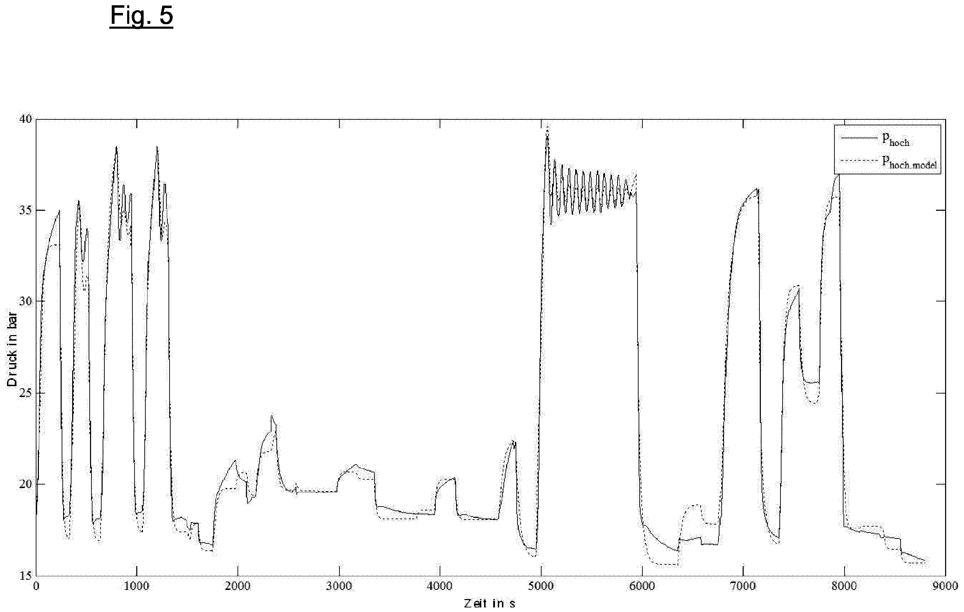

Die Fig. 4 und 5 zeigen die approximierte Gesamtleistung (Fig. 4) des Wärmepumpensystems, welche aus den elektrischen Leistungsaufnahmen des Kältemittelkompressors, der Umwälzpumpe und des Lüfters aufsummiert sind, und den zeitlichen Druckverlauf des Kältemittels 6 am Ausgang des Kältemittelkompressors 2 während der in Fig. 3 dargestellten Anregungen. Hierbei sind die gemessenen Werte durchgezogen und die vom Softsensor gelieferten approximierten Werte gestrichelt dargestellt. Man erkennt jeweils eine gute Approximationsgenauigkeit der jeweiligen Verläufe.

Dementsprechend kann die Leistung für die Berechnung von Wirkungsgraden wie z.B. dem COP, mit einer hohen Genauigkeit, besonders im Fall einer dynamischen Anregung des Systems, verwendet werden, ohne ein Leistungsmessgerät in das System zu integrieren.

Auch der Hochdruckwert muss in einem Kältekreis überwacht werden und ist nach oben hin beschränkt. Dies bedeutet, dass die Funktionen der Wärmepumpe sicherstellen müssen, das System möglichst unterhalb des maximalen Grenzwertes zu betreiben. Da das System zusätzlich über einen hardwareseitigen Hochdruckwächter, der auch einen Hochdrucksensor umfasst, abgesichert wird, kann nun der nichtlineare Beobachter bzw. Softsensor dafür verwendet werden, bei Ausfall des Hochdrucksensors das System trotzdem in einer Art Notbetrieb, einem LHM Betrieb, weiter zu betreiben. Dies ermöglicht eine höhere Auslastung der Anlage beim Kunden und dementsprechend höhere Jahresarbeitszahlen.

Aufgrund der guten **Approximationsfähigkeit** des Softsensors kann die elektrische Leistung des Gerätes ohne zusätzlichen **Hardwaresensor**-Einsatz berechnet werden.

### Bezugszeichenliste

- 1: Kältemittelkreislauf
- 2: Kältekompressor
- 3: Kondensor
- 4: Entspannungs-Regelventil
- 5: Verdampfer
- 6: verdichtetes Kältemittel
- 7: Wärmeträgerstrom
- 8: Umwälzpumpe
- 9: Wärmestrom
- 10: kondensiertes Kältemittel
- 11: Kältestrom
- 12: Umgebungsluft
- 13: Lüfter
- 14: erwärmtes Kältemittel

## Patentansprüche

1. Verfahren zur Identifikation und Regelung oder Steuerung linearer oder nichtlinearer dynamischer Systeme für ein Wärmepumpensystem, enthaltend mindestens
- einen Kältemittelkreislauf (1) mit einem Kältemittel und
- einen Kältemittelkompressor (2),
- mindestens eine Wärmezugabevorrichtung (5),
- mindestens eine Wärmeabgabevorrichtung (3), und
- eine Vorrichtung zur Druckverringerung (4),
zum Einsatz im Bereich der Wohngebäudetechnik unter Verwendung eines Softsensors, der durch einen Rechner ausgebildet oder als Schaltung im Lüftungssystem integriert ist, wobei der Softsensor mit einem geeigneten künstlichen neuronalen Netz implementiert ist, **dadurch gekennzeichnet, dass**
- die Eingangsgrößen Kompressorleistung und Zustand der Vorrichtung zur Druckverringerung auf den Eingang des Softsensors gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des Wärmepumpensystems prognostiziert, und das Wärmepumpensystem geregelt oder gesteuert wird.

2. Verfahren nach Anspruch 1, **dadurch gekennzeichnet, dass** die Ausgangsgröße elektrische Kompressorleistung als Führungsgröße für eine Kaskadenregelung des Wärmepumpensystems verwendet wird.

3. Verfahren nach einem der Ansprüche 1 oder 2, **dadurch gekennzeichnet, dass** mindestens eine Wärmezugabevorrichtung ein Kältemittel-Luft-Wärmeaustauscher (5) ist, der von einen elektrischen Lüfter (13) zwangsbelüftet wird, und die Eingangsgröße Lüfterleistung auf den Eingang des Softsensors gegeben und der Softsensor damit trainiert wird.

4. Verfahren nach einem der Ansprüche 1 bis 3, **dadurch gekennzeichnet, dass** mindestens eine Wärmezugabevorrichtung ein Kältemittel-Erdwärme-Wärmeaustauscher ist, der von einer elektrischen Umwälzpumpe zwangsdurchströmt wird, und die Eingangsgröße Pumpenleistung auf den Eingang des Softsensors gegeben und der Softsensor damit trainiert wird.

5. Verfahren nach einem der Ansprüche 1 bis 4, **dadurch gekennzeichnet, dass** mindestens eine Wärmeentnahmevorrichtung ein Kondensor (3) ist, der an einen Heizkreislauf angeschlossen ist, der von einer elektrischen Umwälzpumpe (8) zwangsdurchströmt wird, und die Eingangsgröße Pumpenleistung auf den Eingang des Softsensors gegeben und der Softsensor damit trainiert wird.

6. Verfahren nach einem der Ansprüche 1 bis 5, **dadurch gekennzeichnet, dass** der Kältemittelkreislauf (1) umschaltbar so ausgeführt ist, dass die Funktionen von Wärmezugabevorrichtung und Wärmeentnahmevorrichtung umgekehrt werden können und die Leistungs-Eingangsgrößen auch für diesen Fall auf den Eingang des Softsensors gegeben werden und der Softsensor damit trainiert wird.

7. Verfahren nach einem der Ansprüche 1 bis 6, **dadurch gekennzeichnet, dass** ein weiterer Kältemittelkreislauf zur Erzeugung einer höheren Nutztemperatur in das Wärmepumpensystem eingekoppelt wird, enthaltend mindestens
- einen Kältemittelkreislauf mit einem höher siedenden Kältemittel und
- einem Kältemittelkompressor,
- mindestens einer Wärmezugabevorrichtung, die mit der Wärmeabgabevorrichtung des ersten Kältemittelkreislaufes verbunden ist,
- mindestens einer Wärmeabgabevorrichtung, und
- einer Vorrichtung zur Druckverringerung,
wobei
- die Eingangsgrößen Kompressorleistung und Zustand der Vorrichtung zur Druckverringerung auf den Eingang des Softsensors des Wärmepumpensystems gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des gekoppelten Wärmepumpensystems prognostiziert, und das gekoppelte Wärmepumpensystem geregelt oder gesteuert wird.

8. Verfahren nach einem der Ansprüche 1 bis 7, **dadurch gekennzeichnet, dass** ein weiterer Kältemittelkreislauf zur Erzeugung einer niedrigeren Nutztemperatur in das Wärmepumpensystem eingekoppelt wird, enthaltend mindestens
- einen Kältemittelkreislauf mit einem niedriger siedenden Kältemittel und
- einem Kältemittelkompressor,
- mindestens einer Wärmezugabevorrichtung,
- mindestens einer Wärmeabgabevorrichtung, die mit der Wärmezugabevorrichtung des ersten Kältemittelkreislaufes verbunden ist, und
- einer Vorrichtung zur Druckverringerung,
wobei
- die Eingangsgrößen Kompressorleistung und Zustand der Vorrichtung zur Druckverringerung auf den Eingang des Softsensors des Wärmepumpensystems gegeben werden,
- der Softsensor mit einem geeigneten Lernalgorithmus trainiert wird,
- die Eingangsgrößen approximiert und als Ausgangsgrößen elektrische Leistung, Temperaturen und Systemdrücke auf einem Speichermedium abgelegt werden,
- mit den Ausgangsgrößen die zugrundeliegende Dynamik des gekoppelten Wärmepumpensystems prognostiziert, und das gekoppelte Wärmepumpensystem geregelt oder gesteuert wird.

9. Verfahren nach einem der Ansprüche 1 bis 8, **dadurch gekennzeichnet, dass** für mindestens einen Kältemittelkreislauf eine Wärmezugabevorrichtung für einen Abwärmespeicher gebildet ist, der aus Abwärme produzierenden Hausgeräten oder einer Klima-Lüftungsanlage gespeist wird.

10. Verfahren nach einem der Ansprüche 1 bis 9, **dadurch gekennzeichnet, dass** für mindestens einen Kältemittelkreislauf eine Kälteentnahmevorrichtung für einen Kältespeicher gebildet ist, der Kälte benötigende Hausgeräte oder eine Klima-Lüftungsanlage versorgt.

11. Verfahren nach einem der Ansprüche 1 bis 10, **dadurch gekennzeichnet, dass** der Softsensor den optimalen Wirkungsgrad des Wärmepumpensystems unter Einbeziehung verfügbarer regenerativer Energie und externen Energieangeboten vorgibt und die benötigte Energiemenge in einem gewünschten Zeitraum mit Hilfe des Softsensors ermittelt und prognostiziert wird.

12. Verfahren nach einem der Ansprüche 1 bis 11, **dadurch gekennzeichnet dass** der Softsensor gezielt auf bekannten Mustern der Ausgangsgrößen trainiert wird, so dass die bekannten Muster im Wärmepumpensystem detektiert werden.

13. Verfahren nach Anspruch 12, **dadurch gekennzeichnet, dass** der Softsensor gezielt darauf trainiert wird, dass bei einem Ausfall eines hardwareseitigen Hochdrucksensors eines Kältekreislaufes ein Notbetrieb eingestellt wird, der ein Weiterarbeiten des Wärmepumpensystem ermöglicht.

14. Verfahren nach Anspruch 12, **dadurch gekennzeichnet, dass** der Softsensor gezielt darauf trainiert wird, dass ein Einfrieren oder Fluten eines Wärmetauschers durch ein Muster der Ausgangsgröße Druckverlust abgebildet wird, so dass der Softsensor beim Erkennen dieses Musters eine Warnmeldung ausgibt.

15. Softsensor zur Ermittlung der Ausgangsgrößen Leistung und Druckverlust eines Wärmepumpensystems im Bereich der Wohngebäudetechnik,
- wobei eine Einrichtung durch einen Computer oder eine Schaltung im Wärmepumpensystem integriert ist, welche direkt, per LAN, WLAN oder Bluetooth an dem Wärmepumpensystem angeschlossen ist,
- und der Softsensor mit einem geeigneten künstlichen neuronalen Netz implementiert ist,
**dadurch gekennzeichnet, dass**
- der Softsensor dazu ausgebildet ist, Messgrößen des Wärmepumpensystems als Eingangsgrößen mit einem geeigneten Lernalgorithmus zu trainieren, und die Ausgangsgrößen als Regel- oder Steuergrößen zu verwenden, um den Betrieb des Wärmepumpensystem zu regeln oder zu steuern.

16. Softsensor nach Anspruch 15, **dadurch gekennzeichnet, dass** der Softsensor mit einem mehrdimensionalen neuronalen Netz mit normierten radialen Basisfunktionen implementiert ist.

17. Softsensor nach Anspruch 16, **dadurch gekennzeichnet, dass** der Softsensor mit einem lokalen Modellnetz mit einem Lolimot-Algorithmus trainiert ist.

18. Softsensor nach einem der Ansprüche 15 bis 17, **dadurch gekennzeichnet, dass** der Softsensor eine Einrichtung zum Detektieren des Wärmepumpensystems aufweist.

19. Softsensor nach einem der Ansprüche 15 bis 18, **dadurch gekennzeichnet, dass** der Softsensor den elektrischen Energieverbrauch des Wärmepumpensystems prognostiziert.

20. Softsensor nach einem der Ansprüche 15 bis 19, **dadurch gekennzeichnet, dass** er modular aus Softsensoren einzelner Baugruppen angeschlossener Teilsysteme gebildet ist.
